(19) Europäisches Patentamt / European Patent Office / Office européen des brevets

(11) **EP 1 573 276 B1**

(12) **EUROPÄISCHE PATENTSCHRIFT**

(45) Veröffentlichungstag und Bekanntmachung des Hinweises auf die Patenterteilung:
**10.06.2009   Patentblatt 2009/24**

(21) Anmeldenummer: **03789157.9**

(22) Anmeldetag: **06.12.2003**

(51) Int Cl.:
*G01F 1/66* *(2006.01)*

(86) Internationale Anmeldenummer:
**PCT/EP2003/013838**

(87) Internationale Veröffentlichungsnummer:
**WO 2004/055484 (01.07.2004 Gazette 2004/27)**

(54) **VORRICHTUNG ZUR POSITIONIERUNG EINES CLAMP-ON DURCHFLUSSMESSGERÄTS AN EINEM BEHÄLTNIS**

DEVICE FOR POSITIONING A CLAMP-ON FLOWMETER ON A CONTAINER

DISPOSITIF DE POSITIONNEMENT D'UN APPAREIL DE MESURE DE DEBIT SOUS FORME DE PINCE DE SERRAGE SUR UN CONTENANT

(84) Benannte Vertragsstaaten:
**AT BE BG CH CY CZ DE DK EE ES FI FR GB GR HU IE IT LI LU MC NL PT RO SE SI SK TR**

(30) Priorität: **16.12.2002   DE 10258997**

(43) Veröffentlichungstag der Anmeldung:
**14.09.2005   Patentblatt 2005/37**

(73) Patentinhaber: **Endress + Hauser Flowtec AG
4153 Reinach (CH)**

(72) Erfinder:
 • **BERGER, Andreas
   CH-4153 Reinach (CH)**
 • **BUSSINGER, Klaus
   CH-4153 Reinach (CH)**
 • **BRUMBERG, Oliver
   79618 Rheinfelden (DE)**
 • **FLEURY, Aurèle
   CH-4147 Aesch (CH)**
 • **FRÖHLICH, Thomas
   CH-4058 Basel (CH)**
 • **STOCKER, Harald
   79650 Schopfheim (DE)**
 • **STRUNZ, Torsten
   CH-4056 Basel (CH)**
 • **WIEST, Armin
   79576 Weil am Rhein (DE)**

(74) Vertreter: **Andres, Angelika Maria et al
   Endress+Hauser (Deutschland) AG+Co. KG
   PatServe
   Colmarer Strasse 6
   79576 Weil am Rhein (DE)**

(56) Entgegenhaltungen:
   **EP-A- 0 733 885         US-A- 4 286 470
   US-A- 5 131 278**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine Vorrichtung zur Postionierung eines Clamp-On Durchflußmeßgeräts an einem Behältnis, das von einem Medium durchströmt wird.

Clamp-on Ultraschall-Durchflußmeßgeräte werden vielfach in der Prozeß- und Automatisierungstechnik eingesetzt. Sie erlauben es, den Volumen- und/oder Massenstrom eines Mediums in einem Behältnis, insbesondere in einer Rohrleitung berührungslos zu bestimmen. Weiterhin haben Sie den Vorteil, daß sie von außen an die Rohrleitung angebracht werden können. Clamp-On Ultraschall-Durchflußmeßgeräte sind beispielsweise in der EP 0 686 255 B1, der US-PS 4,484,478 oder der US-PS 4,598,593 beschrieben.

Die bekannten Ultraschall-Durchflußmeßgeräte arbeiten entweder nach dem Doppler-Prinzip oder nach dem Laufzeitdifferenz-Prinzip. Beim Laufzeitdifferenz-Prinzip wird die unterschiedliche Laufzeit von Ultraschall-Meßsignalen in Strömungsrichtung und entgegen der Strömungsrichtung des Mediums ausgewertet. Hierzu werden die Ultraschall-Meßsignale von den Ultraschallwandlern wechselweise in Strömungsrichtung und entgegen der Strömungsrichtung des Mediums ausgesendet bzw. empfangen. Anhand der Laufzeitdifferenz der Ultraschall-Meßsignale läßt sich die Fließgeschwindigkeit und damit bei bekanntem Durchmesser des Rohres der Volumendurchfluß bzw. bei bekannter Dichte des Mediums der Massendurchfluß bestimmen.

Beim Doppler-Prinzip werden Ultraschall-Meßsignale mit einer vorgegebenen Frequenz in das strömende Medium eingekoppelt. Die in dem Medium reflektierten Ultraschall-Meßsignale werden ausgewertet. Anhand einer zwischen dem eingekoppelten und dem reflektierten Ultraschall-Meßsignal auftretenden Frequenzverschiebung läßt sich ebenfalls die Fließgeschwindigkeit des Mediums bzw. der Volumen und/oder Massenstrom bestimmen. Der Einsatz von Durchflußmeßgeräten, die nach dem Doppler-Prinzip arbeiten, ist nur möglich, wenn in dem Medium Luftbläschen oder Verunreinigungen vorhanden sind, an denen die Ultraschall-Meßsignale reflektiert werden. Damit ist der Einsatz derartiger Ultraschall-Durchflußmeßgeräte im Vergleich zu den Ultraschall-Durchflußmeßgeräten, die nach dem Laufzeitdifferenz-Prinzip arbeiten, ziemlich eingeschränkt.

Bei Clamp-On Ultraschall-Durchflußmeßgeräten, die nach dem Laufzeitdifferenz-Prinzip arbeiten, werden die Ultraschall-Meßsignale unter einem vorgegebenen Winkel in das Behältnis, in dem sich das Medium befindet, eingestrahlt. Damit ein möglichst großer Anteil der von einem Ultraschallwandler in das Behältnis eingestrahlten Energie im jeweils anderen Ultraschallwandler empfangen wird, müssen die beiden Ultraschallwandler einen definierten Abstand voneinander haben. Die jeweilige Position der Ultraschallwandler am Behältnis ist abhängig von dem Innendurchmesser der Rohrleitung und von der Schallgeschwindigkeit des Mediums. Als weitere Applikationsparameter, denen mitunter ein relativ großer Fehler anhaftet, sind die Wandstärke der Rohrleitung und die Schallgeschwindigkeit des Materials der Rohrleitung zu nennen.

Je nach Applikationsfall tritt bei Clamp-On Durchflußmeßgeräten noch eine weitere Fehlerquelle auf, die durch Temperaturänderungen des Mediums oder der Umgebung hervorgerufen wird. Ein Ultraschallwandler, der bei einem Clamp-On Durchflußmeßgerät eingesetzt wird, weist zumindest ein die Ultraschall-Meßsignale erzeugendes piezoelektrisches Element und einen Koppelkeil auf. Der Koppelkeil ist üblicherweise aus Kunststoff gefertigt und dient einerseits dazu, die Ultraschallsignale unter einem definierten Winkel ins Rohr einzustrahlen und andererseits der Impedanzanpassung.Die in einem piezoelektrischen Element erzeugten Ultraschall-Meßsignale werden über den Koppelkeil bzw. den Vorlaufkörper und die Rohrwand in das flüssige Medium geleitet. Da die Schallgeschwindigkeiten in einer Flüssigkeit und in Kunststoff voneinander verschieden sind, werden die Ultraschallwellen beim Übergang von einem Medium in das andere gebrochen. Der Brechungswinkel selbst bestimmt sich nach dem Snellius Gesetz, d.h der Brechungswinkel ist abhängig von dem Verhältnis der Ausbreitungsgeschwindigkeiten der beiden Medien. Mit Koppelkeilen bzw. Vorlaufkörpern aus Kunststoff läßt sich i.a. eine gute Impedanzanpassung erzielen; allerdings zeigt die Schallgeschwindigkeit von Kunststoff eine relativ starke Temperaturabhängigkeit. Typischerweise verändert sich die Schallgeschwindigkeit von Kunststoff von ca. 2500 m/s bei 25° C auf ca. 2200 m/s bei 130° C. Zusätzlich zu der durch die Temperatur hervorgerufenen Änderung der Laufzeit der Ultraschall-Meßsignale im Kunststoff des Koppelkeils, ändert sich auch die Ausbreitungsrichtung der Ultraschall-Meßsignale in dem strömenden Medium. Beide Änderungen wirken sich bei einem nach der Laufzeitdifferenz-Methode arbeitenden Ultraschall-Durchflußmeßgerät daher ungünstig auf die Meßgenauigkeit aus. Um die Meßgenauigkeit auf einem konstanten hohen Maß zu halten, sind daher Korrekturen der Position der Ultraschallwandler erforderlich.

Die Winkelpositionierung der Ultraschallwandler ist bei den bekannten Durchflußmeßgeräten fest vorgegeben. Zwecks Erstmontage oder im Falle späterer Applikationsänderungen ist es aufgrund des Zuvorgesagten erforderlich, den Abstand der beiden Ultraschallwandler definiert aufeinander einzustellen. Hierzu wird üblicherweise einer der beiden Ultraschallwandler solange relativ zum anderen verschoben, bis die Position ermittelt ist, in der die Intensität der von den Ultraschallwandlern empfangenen Meßsignale maximal ist. Nachdem der optimale Abstand der beiden Ultraschallwandler auf diesem 'Trial/Error' Weg ermittelt ist, werden die beiden Ultraschallwandler in der ermittelten Position fest an der Rohrwand arretiert. Dieses Verfahren ist natürlich relativ zeitintensiv. Zur Vereinfachung der relativen Bewegung der Ultraschallwandler werden mechanische Positionierhilfen wie Millimieterskalen oder Lochleisten eingesetzt. Eine Positionierhilfe, die mit einer Lochleiste arbeitet, ist beispielsweise in der EP 0 974 815 A1 und in der US-A-4 286 470 beschrieben.

Hinzu kommt, daß einige der Applikationsparameter, die insbesondere bei einem Clamp-On Durchflußmeßgerät zur exakten Bestimmung des Volumendurchflusses notwendig sind, in den seltensten Fällen genau genug bekannt sind - oder aber die Ermittlung dieser Parameter ist ziemlich aufwendig. Während die Bestimmung des Außendurchmessers der Rohrleitung kaum Probleme bereitet, kann die exakte Ermittlung der Wandstärke der Rohrleitung durchaus problematisch sein. In vielen Fällen ist darüber hinaus weder die Schallgeschwindigkeit des Materials der Rohrleitung noch die Schallgeschwindigkeit des Mediums exakt bekannt.

Der Erfindung liegt die Aufgabe zugrunde, eine Vorrichtung vorzuschlagen, mit der die Positionierung eines Clamp-On Durchflußmeßgeräts an einem Behältnis vereinfacht wird.

Die Aufgabe wird dadurch gelöst, daß zwei Ultraschallwandlern vorgesehen sind, die Meßsignale in das Behältnis aussenden und/oder aus dem Behältnis empfangen; desweiteren sind eine Positioniereinheit zur variablen Positionierung der Ultraschallwandler an dem Behältnis und eine Regel-/Auswerteeinheit vorgesehen, wobei die Regel-/Auswerteeinheit aus vorgegebenen Prozeß- und/oder Systemgrößen eine charakteristische SOLL-Größe der Meßsignale errechnet und anhand eines Vergleichs der errechneten SOLL-Größe mit der entsprechenden gemessenen IST-Größe ermittelt, ob die Ultraschallwandler optimal positioniert sind oder ob die Position der Ultraschallwandler zu verändern ist. Darüber hinaus kommt eine Anzeigeeinheit zum Einsatz, die eine erforderliche Positionsänderung und/oder die Richtung, in der eine Positionsänderung zu erfolgen hat, zur Anzeige bringt.

Erfindungsgemäß erfolgt eine Erkennung einer Fehlpositionierung der Ultraschallwandler und eine diese Fehlpositionierung ausgleichende Gegenmaßnahme aufgrund der von der in jeweils einem Ultraschallwandler empfangenen Signale. Anhand der empfangenen Meßsignale wird zumindest eine unter den Applikationsbedingungen auftretende charakteristische IST-Größe des Meßsignals ermittelt.

Bei der chrakteristischen Größe handelt es sich bevorzugt um die Intensität der Meßsignale und/oder um die Laufzeit der Meßsignale. Dieser gemessene Wert wird mit einer entsprechenden charakteristischen SOLL-Größe verglichen. Handelt es sich bei der charakteristischen Größe um die Laufzeit, so wird die entsprechende SOLL-Größe errechnet, wobei zwecks Berechnung das Brechungsgesetz von Snellius zur Anwendung kommt. Üblicherweise sind nicht alle in den entsprechenden Gleichungen genannten Größen exakt bekannt. So ist in vielen Fällen die exakte Schallgeschwindigkeit des Mediums nicht bekannt. In einem solchen Fall wird der z.B. anhand einer Tabelle ersichtliche, wahrscheinlichste Wert für die Schallgeschwindigkeit des Mediums eingesetzt. Alternativ ist es möglich, die Schallgeschwindigkeit des Mediums anhand einer Messung zu bestimmen, indem die Laufzeit von Ultraschallwellen in senkrechter Richtung zur Fließrichtung des Mediums gemessen wird. Derartige Verfahren werden bereits in der Praxis angewendet, so daß an dieser Stelle auf eine exakte Beschreibung verzichtet werden kann.

Gemäß einer bevorzugten Ausgestaltung der erfindungsgemäßen Vorrichtung ist die Anzeigeeinheit derart ausgestaltet, daß sie dem Bedienpersonal die korrekte Position der Ultraschallwandler auf optischem und/oder auf akustischem Wege signalisiert oder daß die Anzeigeeinheit dem Bedienpersonal ggf. sukzessive Hinweise gibt, in welcher Richtung zumindest einer der Ultraschallwandler zwecks korrekter Positionierung zu verschieben ist. Eine vorteilhafte Ausgestaltung der erfindungsgemäßen Vorrichtung schlägt vor, daß die Anzeigeeinheit integraler Teil des Clamp-On Druchflußmeßgerätes ist. Insbesondere ist vorgesehen, daß es sich bei der Anzeigeeinheit um ein Display handelt.

Die Information an den Anwender kann beispielsweise dadurch erfolgen, daß die Verschieberichtung und/oder der Betrag der Verschiebung der beiden Ultraschallwandler auf der Anzeigeeinheit in numerischen und/oder in graphischen Symbolen zur Anzeige kommt.

Prinzipiell kann es sich bei der Anzeigeeinheit um zumindest ein optisches und/oder um zumindest ein akustisches Wiedergabe-Element handelt, wobei das jeweils verwendete Element in verschiedenen Modi betreibbar ist.

Insbesondere kann es sich bei dem optischen Wiedergabe-Element um eine Leuchtdiode handeln, wobei es sich bei den Modi in diesem Fall z.B. um einen Blinkmodus, um einen Ein-Modus und/oder um einen Aus-Modus handelt.

Alternativ oder zusätzlich ist das optische Wiedergabe-Element so ausgestaltet, daß den unterschiedlichen Modi unterschiedliche Farbkennzeichnungen und/oder Symbole zugeordnet sind.

Kommt ein akustisches Wiedergabe-Element zum Einsatz, so ist es bevorzugt derart ausgestaltet, daß die unterschiedlichen Modi durch unterschiedliche Tonhöhen und/oder durch unterschiedliche Wiederholfrequenzen von zumindest einer Tonhöhe realisiert sind.

Die Erfindung wird anhand der nachfolgenden Zeichnungen näher erläutert. Es zeigt:

Fig. 1: eine schematische Darstellung des Schallpfades eines Ultraschallmeßsignals in einer Rohrleitung,
Fig. 2: eine schematische Darstellung einer ersten Ausgestaltung der erfindungsgemäßen Vorrichtung,
Fig. 3: eine schematische Darstellung einer zweiten Ausgestaltung der erfindungsgemäßen Vorrichtung und
Fig. 4: eine schematische Darstellung einer dritten Ausgestaltung der erfindungsgemäßen Vorrichtung.

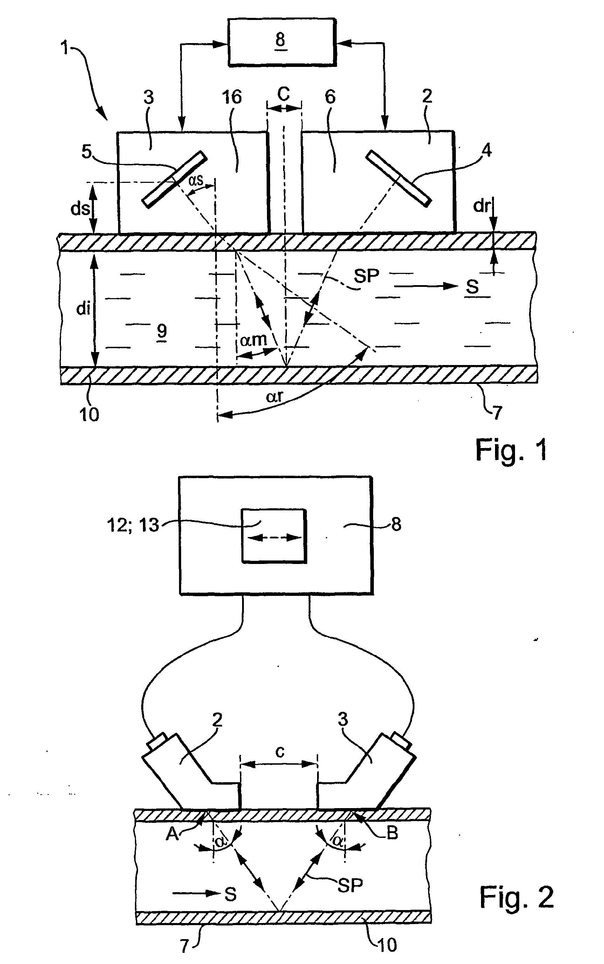

Fig. 1 zeigt eine schematische Darstellung des Schallpfades SP eines Ultraschallmeßsignals in einer Rohrleitung bzw. in einem Rohr 7. Das Clamp-On Durchflußmeßgerät 1 ermittelt den Volumendurchfluß bzw. den Massendurchfluß des Mediums 9 in dem Rohr 7 nach der bekannten Laufzeitdifferenz-Methode.

Wesentliche Komponenten des Clamp-On Ultraschall-Durchflußmeßgerätes 1 sind die beiden Ultraschallwandler bzw. Ultraschallsensoren 2, 3 und die Regel-/Auswerteeinheit 8. Die beiden Ultraschallwandler 2, 3 sind mittels einer in der Fig. 1 nicht gesondert dargestellten Befestigungsvorrichtung an dem Rohr 7 angebracht. Entsprechende Befestigungsvorrichtungen sind aus dem Stand der Technik hinlänglich bekannt und werden auch von der Anmelderin angeboten und vertrieben. Das Rohr 7 mit dem Innendurchmesser *di* wird von dem Medium 9 in Strömungsrichtung S durchströmt.

Ein Ultraschallwandler 2; 3 weist als wesentliche Bestandteile zumindest ein piezoelektrisches Element 4; 5, das die Ultraschall-Meßsignale erzeugt und/oder empfängt, und einen Koppelkeil 6; 16 auf. Die Ultraschall-Meßsignale werden über den Koppelkeil 6; 16 und über die Rohrwand 10 in das vom Medium 9 durchströmte Rohr 7 eingekoppelt bzw. aus dem Rohr 7 ausgekoppelt.
Die beiden Ultraschallwandler 2, 3 sind derart ausgestaltet, daß sie Ultraschall-Meßsignale aussenden und empfangen. Der optimale Abstand c der beiden Ultraschallwandler 2, 3 ist - wie bereits an vorhergehender Stelle beschrieben - von verschiedenen System- und oder Prozeßgrößen abhängig.

Um sicherzustellen, daß die maximale Energie, die von einem Ultraschallwandler 2; 3 ausgesendet wird, auch in dem jeweils anderen Ultraschallwandler 3; 2 empfangen wird, ist eine auf den jeweiligen Anwendungsfall abgestimmte Positionierung der Ultraschallwandler 2, 3 erforderlich. Bei diesen System- und Prozeßgrößen handelt es sich beispielsweise um den Innendurchmesser *di* des Rohres 7, um die Wandstärke dr des Rohres 7, um die Schallgeschwindigkeit *cr* des Materials, aus dem das Rohr 7 gefertigt ist, oder um die Schallgeschwindigkeit *cm* des Mediums 9. Prinzipiell ist eine Justierung der Ultraschallwandler 2, 3 sowohl bei der Erstmontage als auch immer dann erforderlich, wenn es zu einer wesentlichen Änderung von zumindest einer Prozeß- und/oder Systemgröße kommt.

In dem gezeigten Ausführungsbeispiel ist der Abstand c der beiden Ultraschallwandler 2, 3 so bemessen, daß sich die Ultraschall-Meßsignale, die entsprechend der Laufzeitdifferenz-Methode wechselweise von den beiden Ultraschallwandlern 2, 3 ausgesendet und empfangen werden, über nur einen Schallpfad SP in dem vom Medium 9 durchströmten Behältnis 7 ausbreiten. Der Schallpfad SP hat zwei Traversen. Eine Traverse kennzeichnet den Teilbereich des Schallpfades SP, auf dem ein Ultraschall-Meßsignal den Behälter 7 einmal quert. Die Querung kann diametral oder kordial sein.

Sind die nachfolgend genannten Größen zumindest näherungsweise bekannt, so läßt sich die SOLL-Größe, die erfindungsgemäß der Positions- und Statusanzeigeeinheit vorgegebenen wird, errechnen. Bei den Größen handelt es sich im einzelnen um:

- den Abstand ds eines Ultraschallwandlers 2; 3 zur Rohrwand 10;
- die Dicke *dr* der Rohrwand 10;
- den Innendurchmesser *di* des Rohres 7;
- die Schallgeschwindigkeit *cs* im Vorlaufkörper 6; 7;
- die Schallgeschwindigkeit *cr* im Rohr 7;
- die Schallgeschwindigkeit *cm* im Medium 9;
- den Winkel *as* im Ultraschallwandler 2; 3;
- den Winkel *ar* im Rohr 7;
- den Winkel *am* im Medium;
- die Anzahl *n* der Traversen. Im gezeigten Fall ist n = 2.

Der Einstrahlwinkel *ar* im Rohr 7 läßt sich unter Zuhilfenahme des Snellius' Gesetzes durch die folgende Formel darstellen:

$$ar = \operatorname{asin}(\frac{cr}{cs}\ \sin(as))$$

Der Einfallwinkel *am* ins Medium 9 läßt sich durch die folgende Formel beschreiben :

$$am = \operatorname{asin}(\frac{cm}{cs}\ \sin(as))$$

Die Laufzeit Tsoll der Ultraschall-Meßsignale auf dem Schallpfad SP läßt sich dann anhand der nachfolgenden Formel berechnen:

$$Tsoll = \frac{2 \cdot ds}{\cos(as) \quad cs} + \frac{2 \cdot dr}{\cos(ar) \quad cr} + \frac{n \cdot di}{\cos(am) \quad cm}$$

Sind alle Parameter bekannt, so berechnet sich die Laufzeit *Tsoll* des Ultraschall-Meßsignals nach obiger Formel. Hierbei wurde übrigens die Annahme getroffen, daß in der Rohrleitung 7 der Durchfluß Null ist. In einer Vielzahl von Anwendungsfällen ist nun zumindest die Schallgeschwindigkeit *cm* des Mediums 9 nicht bekannt. Folglich stimmt die gemessene Laufzeit *Tist* nicht mit der errechneten Laufzeit *Tsoll* überein, da in vielen Fällen für die Schallgeschwindigkeit *cm* des Mediums 9 zwecks Vereinfachung ein Schätzwert genommen wird. Ein besseres Ergebnis läßt sich erzielen, wenn die Schallgeschwindigkeit *cm* des Mediums 9 in einem separaten Verfahrensschritt gemessen wird.

Anschließend wird die tatsächliche Laufzeit *Tist* des Ultraschall-Meßsingals gemessen und mit der errechneten Laufzeit *Tsoll* verglichen. Ergibt sich anhand des Vergleichs, daß die gemessene Lauzeit *Tist* größer ist als die vorgegebene Laufzeit *Tsoll*, so müssen die beiden Ultraschallwandler 2, 3 näher zusammengerückt werden, der Abstand c der beiden Ultraschallwandler 2, 3 wird also verringert. Ist hingegen die gemessene Lauzeit *Tist* kleiner als die vorgegebene Laufzeit *Tsoll*, so müssen die beiden Ultraschallwandler 2, 3 auseinander gerückt werden, d.h. der Abstand c wird vergrößert. Erfindungs-gemäß wird dem Bedienpersonal nun zur Anzeige gebracht, in welcher Richtung und ggf. um welchen Wert die Relativbewegung der Ultraschall-wandler 2, 3 zu erfolgen hat.

In den Figuren Fig. 2 bis Fig. 4 sind schematische Darstellungen von verschiedenen Ausgestaltungen der erfindungsgemäßen Vorrichtung zu sehen. Wie bereits gesagt, vermittelt die erfindungsgemäße Positions- und Statusanzeigeeinheit 12 dem Bedienpersonal die zur Positionierung der Ultraschallwandler 2, 3 notwendige Information. Bei dem in Fig. 2 dargestellten Fall erfolgt die Status- und Positionsanzeige über ein Display 13, das in die Regel-/Auswerteeinheit 6 integriert ist. Die Richtungsanzeige der Verschiebung der Ultraschallwandler 2,3 wird im gezeigten Fall über Pfeile dargestellt; insbesondere ist hier symbolisiert, daß die Ultraschallwandler 2, 3 einen größeren Abstand c voneinander haben müssen. Die Betrag der notwendigen Verschiebung kann über die Länge der Pfeile angezeigt werden. Ein Erreichen der vorgegebenen Distanz c der Ultraschallwandler 2, 3 kann beispielsweise durch ein Verschwinden der Pfeile symbolisiert werden, oder es erscheint ein entsprechender Text, z.B. 'Sensorposition erreicht' oder ein entsprechendes allgemein verständliches Symbol.

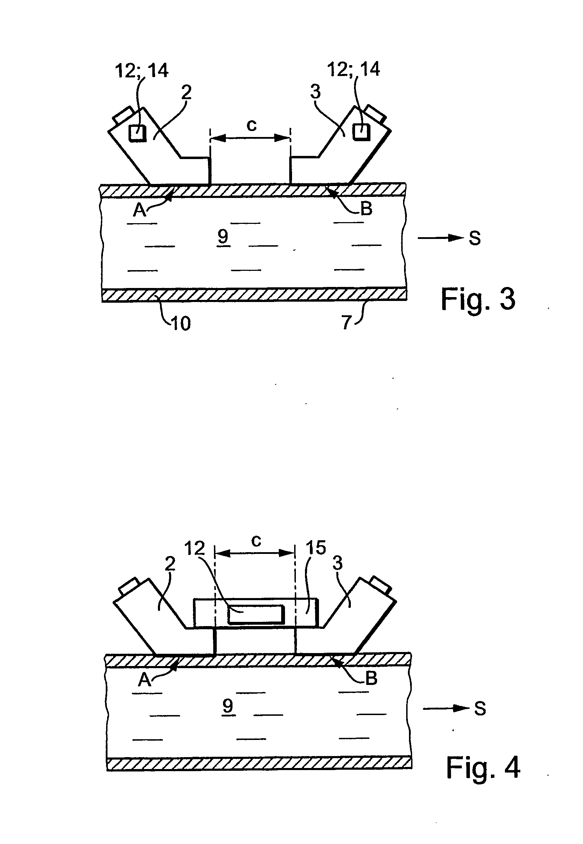

Fig. 3 zeigt eine alternative Ausgestaltung der erfindungsgemäßen Status- und Positionsanzeigeinheit 12 bei einem Clamp-On Ultraschall-Durchflußmeßgerät 1. Die Anzeige erfolgt hier über die beiden Wiedergabe-Elemente 14, bei denen es sich im einfachsten Fall um Leuchtdioden handelt. Beispielsweise wird durch die Farbe oder durch Blinken der Leuchtdioden angezeigt, in welche Richtung die beiden Ultraschallwandler 2, 3 verschoben werden müssen oder ob die korrekte Position - gekennzeichnet durch die idealen Einkoppelungspunkte A, B - bereits erreicht ist.

In Fig. 4 sind die beiden Ultraschallwandler 2, 3 über ein Führungselement, insbesondere über eine Schiene 15 miteinander verbunden. Diese Schiene 15 kann als Meßsystem ausgebildet sein. Alternativ ist vorgesehen, daß das Meßsystem in die Schiene 15 integriert ist. Das Meßsystem bestimmt auch hier die Distanz c zwischen den beiden Ultraschallwandlern 2, 3 und zeigt eine eventuell erforderliche Verschiebung an. Durch die Schiene 15 wird das achsparallele Verschieben der beiden Ultraschallwandler 2, 3 relativ zum Rohr 7 erleichtert. Wie bereits erwähnt, sind derartige Positioniereinheiten als solche aus dem Stand der Technik bereits bekannt geworden.

Die Anzeige der Verschieberichtung erfolgt wiederum auf einem Display 13. Beispielsweise wird die notwendige Verschiebung in Form einer Zahl auf dem Display 13 z.B. mittels eines Linearpotis mit Digitalanzeige dargestellt. Es versteht sich von selbst, daß zwecks Anzeige der erforderlichen Verschiebung der Ultraschallwandler 2, 3 auch eine oder mehrere Leuchtdioden auf dem Führungselement 15 angebracht sein können. Darüber hinaus ist in allen Fällen anstelle der optischen Anzeige alternativ oder zusätzlich eine akustische Anzeige möglich.

Weiterhin schlägt eine bevorzugte Ausgestaltung der erfindungsgemäßen Vorrichtung vor, daß die Ultraschallwandler 2, 3 entsprechend der Abweichung des aktuellen Werts der charakteristischen Größe von der entsprechenden vorgegebenen Größe automatisch in die korrekte Position verfahren werden. In diesem Fall kann auf die Anzeigeeinheit 12 auch gänzlich verzichtet werden. Lediglich der Positioniermechanismus als solcher muß automatisiert werden. Entsprechende automatische Positioniermechanismen sind aus vielen Anwendungsbereichen (z. B. aus der Materialbearbeitung) hinlänglich bekannt.

**Bezugszeichenliste**

| 1 | Ultraschall-Durchflußmeßgerät |
|---|---|
| 2 | Ultraschallwandler |
| 3 | Ultraschallwandler |
| 4 | Piezoelektrisches Element |
| 5 | Piezoelektrisches Element |
| 6 | Koppelkeil / Vorlaufkörper |
| 7 | Behältnis / Rohr |
| 8 | Regel-/Auswerteeinheit |
| 9 | Medium |
| 10 | Rohrwand |
| 11 | Positioniereinheit |
| 12 | Anzeigeeinheit |
| 13 | Display |
| 14 | Wiedergabe-Element |
| 15 | Schiene / Führungselement |
| 16 | Koppelkeil / Vorlaufkörper |
| S | Strömungsrichtung |
| SP | Schallpfad |

| ds | Abstand Ultraschallwandler zur Rohrwand |
|---|---|
| dr | Dicke der Rohrwand |
| di | Innendurchmesser des Rohres |
| cs | Schallgeschwindigkeit im Vorlaufkörper |
| cr | Schallgeschwindigkeit im Rohr |
| cm | Schallgeschwindigkeit im Medium |
| as | Winkel im Ultraschallwandler |
| ar | Winkel im Rohr |
| am | Winkel im Medium |
| n | Anzahl Traversen |
| c | Abstand der Ultraschallwandler |

**Patentansprüche**

**1.** Vorrichtung zur Postionierung eines Clamp-On Durchflußmeßgeräts (1) an einem Behältnis (7), das von einem Medium (9) durchströmt wird,
mit zumindest zwei Ultraschallwandlern (2; 3), die Meßsignale in das Behältnis (7) aussenden und/oder aus dem Behältnis (7) empfangen,
mit einer Positioniereinheit (11) zur variablen Positionierung der Ultraschallwandler (2, 3) an dem Behältnis (7),
**dadurch gekennzeichnet, dass** sie mit einer Regel-/Auswerteeinheit (8) versehen ist, die aus vorgegebenen Prozeß- und/oder Systemgrößen eine charakteristische SOLL-Größe Tsoll der Meßsignale errechnet und die anhand eines Vergleichs der errechneten SOLL-Größe Tsoll mit der entsprechenden gemessenen IST-Größe Tist ermittelt, ob die Ultraschallwandler (2, 3) optimal positioniert sind oder ob die Position der Ultraschallwandler (2, 3) zu verändern ist, und
dass sie mit einer Anzeigeeinheit (12) versehen ist, die dem Bedienpersonal eine erforderliche Positionsänderung und/oder die Richtung in der eine Positionsänderung zu erfolgen hat, zur Anzeige bringt.

**2.** Vorrichtung nach Anspruch 1,
**dadurch gekennzeichnet,**
**daß** die Anzeigeeinheit (12) derart ausgestaltet ist, daß sie dem Bedienpersonal die korrekte Position der Ultraschallwandler (2, 3) auf optischem und/oder auf akustischem Wege signalisiert oder daß die Anzeigeeinheit (12) dem Bedienpersonal ggf. sukzessive Hinweise gibt, in welcher Richtung die Ultraschallwandler (2, 3) zwecks korrekter Positonierung zu verschieben sind.

**3.** Vorrichtung nach Anspruch 1 oder 2,
**dadurch gekennzeichnet,**
**daß** die Anzeigeeinheit (12) integraler Teil des Clamp-On Druchflußmeßgerätes (1) ist.

**4.** Vorrichtung nach Anspruch 1 oder 3,
**dadurch gekennzeichnet,**
**daß** es sich bei der Anzeigeeinheit (12) um ein Display (13) handelt.

**5.** Vorrichtung nach Anspruch 4,
**dadurch gekennzeichnet,**
**daß** die Verschieberichtung und/oder der Betrag der Verschiebung der beiden Ultraschallwandler (2, 3) auf der Anzeigeeinheit in numerischen und/oder in graphischen Symbolen zur Anzeige kommt.

**6.** Vorrichtung nach Anspruch 1 oder 3,
**dadurch gekennzeichnet,**
**daß** es sich bei der Anzeigeeinheit (12) um zumindest ein optisches und/oder um zumindest ein akustisches Wiedergabe-Element (14) handelt, wobei das jeweils verwendete Wiedergabe-Element (14) in verschiedenen Modi betreibbar ist.

**7.** Vorrichtung nach Anspruch 6,
**dadurch gekennzeichnet,**
**daß** es sich bei dem optischen Wiedergabe-Element (14) um eine Leuchtdiode handelt, wobei es sich bei den Modi um einen Blinkmodus, um einen Ein-Modus und/oder um einen Aus-Modus handelt.

**8.** Vorrichtung nach Anspruch 6,
**dadurch gekennzeichnet,**
**daß** das optische Wiedergabe-Element (14) so ausgestaltet ist, daß den unterschiedlichen Modi unterschiedliche Farbkennzeichnungen und/oder Symbole zugeordnet sind.

**9.** Vorrichtung nach Anspruch 6,
**dadurch gekennzeichnet,**
**daß** das akustische Wiedergabe-Elements (14) so ausgestaltet ist, daß die unterschiedlichen Modi durch unterschiedliche Tonhöhen und/oder durch unterschiedliche Wiederholfrequenzen von zumindest einer Tonhöhe realisiert sind.

**10.** Vorrichtung nach einem oder mehreren der vorhergehenden Ansprüche,
**dadurch gekennzeichnet,**
**daß** es sich bei der chrakteristischen Größe um die Intensität der Meßsignale und/oder um die Laufzeit T der Meßsignale handelt.


**Claims**

**1.** Unit for positioning a clamp-on flowmeter (1) on a container (7) through which a medium (9) flows with at least two ultrasonic converters (2; 3) that transmit measuring signals to the container (7) and/or receive measuring signals from the container (7), with a positioning unit (11) to variably position the ultrasonic converters (2, 3) on the container (7), **characterized in that:**

   - it is provided with a control/evaluation unit (8) that calculates a characteristic TARGET variable (Ttarget) of the measuring signals from prespecified process and/or system variables, and compares the TARGET variable (Ttarget) with the ACTUAL variable measured (Tactual) to determine whether the ultrasonic converters (2, 3) are optimally positioned and whether the position of the ultrasonic converters (2, 3) has to be changed
   - it is provided with a display unit (12) which tells the operating staff whether a position change is needed and/or indicates the direction in which a position change is to take place.

**2.** Unit as per Claim 1, **characterized in that:**

   the display unit (12) is designed in such a way that it optically and/or acoustically signals the correct position of the ultrasonic converters (2, 3) to the operating staff, or **characterized in that** the display unit (12) gives the operating staff consecutive hints as to the direction the ultrasonic converters (2, 3) have to be moved to position them correctly.

**3.** Unit as per Claim 1 or 2, **characterized in that:**

the display unit (12) is an integral part of the clamp-on flowmeter (1).

**4.** Unit as per Claim 1 or 3, **characterized in that:**

the display unit (12) is a display (13).

**5.** Unit as per Claim 4, **characterized in that:**

the direction of movement and/or the amount of movement of the two ultrasonic converters (2, 3) is displayed on the display unit in numeric and/or graphic symbols.

**6.** Unit as per Claim 1 or 3, **characterized in that:**

the display unit (12) is at least one optical and/or one acoustic representation element (14), and various operating modes are associated with the particular representation element (14).

**7.** Unit as per Claim 6, **characterized in that:**

the optical representation element (14) is a light emitting diode and the associated modes are a flashing mode, an "on" mode and an "off" mode.

**8.** Unit as per Claim 6, **characterized in that:**

the optical representation element (14) is designed in such a way that different colors and/or symbols are assigned to the various modes.

**9.** Unit as per Claim 6, **characterized in that:**

the acoustic representation element (14) is designed in such a way that the different modes are implemented by different pitches and/or by different frequencies at which at least one pitch is repeated.

**10.** Unit as per one of the previous claims, **characterized in that:**

the characteristic variable refers to the intensity of the measuring signals and/or the run time (T) of the measuring signals.

**Revendications**

**1.** Dispositif destiné au positionnement d'un débitmètre Clamp On (1) sur un réservoir (7), lequel est parcouru par un produit (9),
avec au moins deux convertisseurs ultrasonores (2, 3), qui émettent des signaux de mesure dans le réservoir (7) et/ou reçoivent des signaux de mesure depuis le réservoir (7),
avec une unité de positionnement (11) destinée au positionnement variable des convertisseurs ultrasonores (2, 3) sur le réservoir (7),
**caractérisé**
**en ce qu'**il est muni d'une unité de régulation et d'exploitation (8) qui, à partir de grandeurs process et/ou système prédéfinies, calcule une grandeur de consigne caractéristique Tcons des signaux de mesure et qui, au moyen d'une comparaison de la grandeur de consigne Tcons calculée avec la grandeur réelle Tréel mesurée correspondante, détermine si les convertisseurs ultrasonores (2, 3) sont positionnés de façon optimale et si la position des convertisseurs ultrasonores (2, 3) doit être modifiée, et
**en ce qu'**il est muni d'une unité d'affichage (12), qui affiche au personnel de service un changement de position nécessaire et/ou la direction, dans laquelle un changement de position doit avoir lieu.

**2.** Dispositif selon la revendication 1,
**caractérisé en ce**

**que** l'unité d'affichage (12) est conçue de telle manière qu'elle signale au personnel de service la position correcte des convertisseurs ultrasonores (2, 3) de manière optique et/ou acoustique, ou en ce que l'unité d'affichage (12) donne le cas échéant des informations successives au personnel de service, à savoir la direction dans laquelle les convertisseurs ultrasonores (2, 3) doivent être décalés pour un positionnement correct.

3. Dispositif selon la revendication 1 ou 2,
   **caractérisé en ce**
   **que** l'unité d'affichage (12) fait partie intégrante du débitmètre Clamp On (1).

4. Dispositif selon la revendication 1 ou 3,
   **caractérisé en ce**
   **que,** concernant l'unité d'affichage (12), il s'agit d'un afficheur (13).

5. Dispositif selon la revendication 4,
   **caractérisé en ce**
   **que** la direction du décalage et/ou la valeur du décalage des deux convertisseurs ultrasonores (2, 3) sont affichées sur l'unité d'affichage sous la forme de symboles numériques et/ou graphiques.

6. Dispositif selon la revendication 1 ou 3,
   **caractérisé en ce**
   **que,** concernant l'unité d'affichage (12), il s'agit au minimum d'un élément de restitution optique et/ou au minimum d'un élément de restitution acoustique (14), chaque élément de restitution (14) utilisé pouvant être exploité dans différents modes.

7. Dispositif selon la revendication 6,
   **caractérisé en ce**
   **que,** concernant l'élément de restitution (14) optique, il s'agit d'une diode électroluminescente, les différents modes étant constitués d'un mode clignotant, d'un mode activé et/ou d'un mode désactivé.

8. Dispositif selon la revendication 6,
   **caractérisé en ce**
   **que** l'élément de restitution (14) optique est conçu de telle manière que différentes identifications de couleur et/ou différents symboles sont attribués aux différents modes.

9. Dispositif selon la revendication 6,
   **caractérisé en ce**
   **que** l'élément de restitution (14) acoustique est conçu de telle manière que les différents modes sont réalisés au moyen de différentes hauteurs de son et/ou au moyen de différentes fréquences de répétition d'au moins une hauteur de son.

10. Dispositif selon une ou plusieurs des revendications précédentes,
    **caractérisé en ce**
    **que,** concernant la grandeur caractéristique, il s'agit de l'intensité des signaux de mesure et/ou du temps de propagation T des signaux de mesure.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0686255 B1
- US PS4484478 A
- US PS4598593 A
- EP 0974815 A1
- US 4286470 A